# EUROPÄISCHE PATENTSCHRIFT

(11) **EP 1 434 948 B1**
(45) Veröffentlichungstag und Bekanntmachung des Hinweises auf die Patenterteilung: **09.03.2005**
(21) Anmeldenummer: 02801283.9
(22) Anmeldetag: 05.08.2002
(51) Int. Cl.: F16C 35/02, F16B 11/00

(54) **LAGERELEMENT**
BEARING ELEMENT
ELEMENT PALIER

(30) Priorität: 13.10.2001 DE 10150654
(43) Veröffentlichungstag der Anmeldung: 07.07.2004
(73) Patentinhaber: KS Gleitlager GmbH, 68789 St. Leon-Rot (DE)
(72) Erfinder: HEUBERGER, Jürgen, 74889 Sinsheim (DE); RUBEL, Herbert, 74889 Sinsheim-Weiler (DE)
(74) Vertreter: Friz, Oliver
(86) Internationale Anmeldenummer: PCT/EP2002/008707
(87) Internationale Veröffentlichungsnummer: WO 2003/033927

(56) Entgegenhaltungen:
- DE-A- 19 954 912
- DE-C- 3 905 175
- US-A- 3 433 539
- US-A- 3 672 030
- US-B1- 6 227 709

## Beschreibung

Die Erfindung betrifft ein Lagerelement, insbesondere zur Lagerung von Hebeln zur Steuerung von Kraftfahrzeugen oder deren Verbrennungsmotoren, mit einer Stützschicht und einer darauf aufgebrachten Gleitschicht, wobei ein von einer der Gleitschicht abgewandten Seite der Stützschicht vorspringendes polygonales Halteelement vorgesehen ist, das zur drehfesten Verankerung des Lagerelements im montierten Zustand in eine entsprechend ausgebildete Ausnehmung in einem Lagergehäuseteil eingreift.

US-B-6,227,709 zeigt ein gattungsgemäßes halbkreisförmiges Lagerelement, bei dem das Halteelement als Ausklinkung im Bereich der Stirnseite oder Teilungsebene zweier Lagerelemente ausgebildet ist; die Ausklinkung führt zu einer polygonalen Form.

US-A-3,433,539 zeigt ein halbkreisförmiges Lagerelement, bei dem das Halteelement als abgestufte Hülse mit runder Außenform ausgebildet und in einer Durchgangsöffnung des Lagerelements angeordnet ist.

Lagerelemente der hier in Rede stehenden Art sollen sich im Betrieb, beispielsweise als Lagerung eines Bremshebels, in Umfangsrichtung nicht verdrehen lassen.
Es ist bereits bekannt, auf der von der Gleitschicht abgewandten Seite des Lagerelements ein Halteelement vorzusehen, das in eine Ausnehmung im Lagergehäuseteil eingreift. Hierdurch kann eine drehfeste Anordnung des Lagerelements bezüglich des Lagergehäuseteils erreicht werden. Es erweist sich aber regelmäßig als aufwendig, das Halteelement und die Ausnehmung derart zu fertigen, dass sich eine passgenaue und im Wesentlichen spielfreie Festlegung des Lagerelements ergibt.

Der vorliegenden Erfindung liegt hiervon ausgehend die Aufgabe zugrunde, den konstruktiven Aufwand und die Genauigkeit bei der Herstellung und Montage von Lagerelementen zu reduzieren, ohne dass dies mit höheren Kosten verbunden ist.

Diese Aufgabe wird durch ein Lagerelement mit den Merkmalen des Anspruchs 1 gelöst. Insbesondere erweist es sich als vorteilhaft, wenn das Halteelement 5-bis 9-eckig, vorzugsweise 6- bis 9-eckig und insbesondere 8-eckig ausgebildet ist.

Dies eröffnet die Möglichkeit, dass eine im Lagergehäuseteil ausgebildete, vorzugsweise mit einer stetigen Umfangsfläche mit vorzugsweise kreisrundem Querschnitt versehene Ausnehmung im Lagergehäuseteil mit einer geringfügig kleineren Innenabmessung als die Außenabmessung des polygonalen Halteelements ausgebildet wird. Das Lagerelement lässt sich mit seinem polygonalen Halteelement in diese geringfügig kleiner ausgebildete Ausnehmung nämlich unter geringfügiger plastischer Verformung der Innenwandung der Ausnehmung und/oder der Eckkanten der Polygonform so einbringen, dass die Lagerschale absolut spielfrei am Lagergehäuseteil angeordnet ist. Es kommt daher nicht zu störender Geräuschentwicklung im Betrieb. Der bei der Herstellung zu treibende Aufwand im Hinblick auf eine hochgenaue Fertigung und Klassierung von Lagerelementen und Lagergehäuseteilausnehmungen wird erheblich reduziert.

Es hat sich des Weiteren als ganz besonders vorteilhaft erwiesen, wenn bei einer Anordnung aus einem Lagerelement und einem Lagergehäuseteil der Innendurchmesser der vorzugsweise kreisrunden Ausnehmung geringfügig kleiner gewählt wird als der unter Berücksichtigung von Fehlertoleranzen sich ergebende untere Wert für den Durchmesser des Umkreises der Polygonform des Halteelements. Es ist dann nämlich in jedem Fall sichergestellt, dass eine spielfreie Aufnahme bzw. Montage des Lagerelements am Lagergehäuseteil erreicht wird.

Desweiteren erweist es sich als ganz besonders vorteilhaft, wenn die Ausnehmung im Bereich des Übergangs zu einer Lageraufnahmefläche eine Abstufung oder Anfasung aufweist.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung. In der Zeichnung zeigt:
- Figur 1: eine Schnittansicht durch ein Lagergehäuseteil mit montiertem Lagerelement (schematisch);
- Figur 2: eine ausschnittweise Draufsicht auf den Rücken des Lagerelements mit einem Halteelement;
- Figur 3: eine ausschnittweise Schnittansicht des Lagerelements mit Schnittebene entsprechend den Pfeilen III-III in Figur 2;
- Figur 4: eine ausschnittsweise Draufsicht auf das Lagergehäuseteil mit einer Ausnehmung;
- Figur 5: eine ausschnittsweise Schnittansicht durch ein Lagergehäuseteil mit montiertem Lagerelement und erweiterter Ausnehmung.

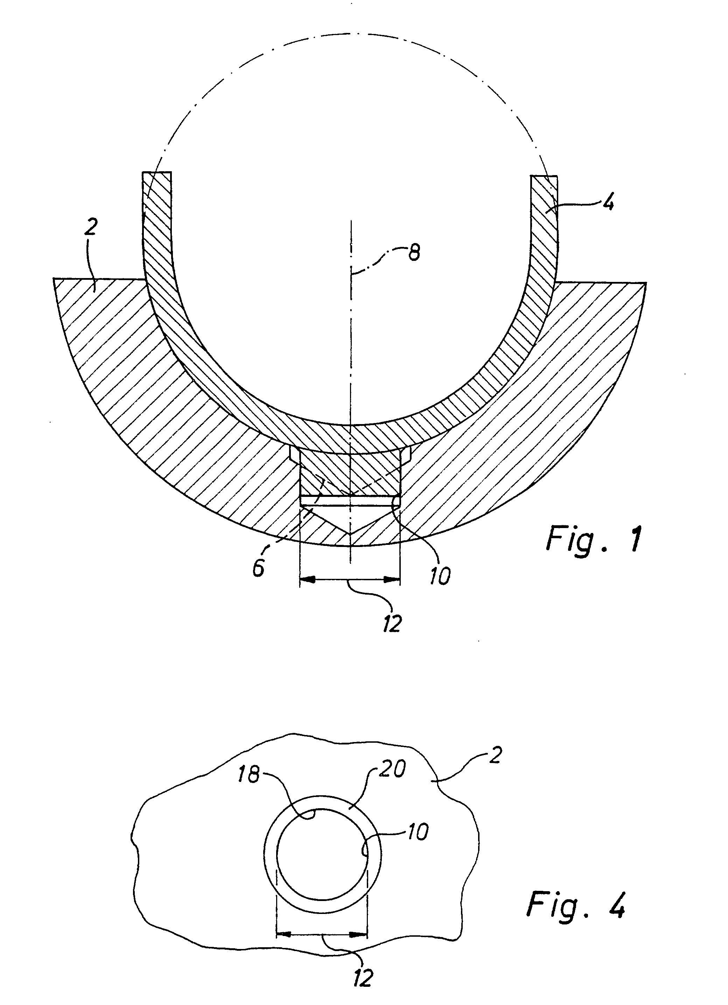

Die Figur 1 zeigt ein im Schnitt schematisch angedeutetes Lagergehäuseteil 2 mit einem daran montierten Lagerelement 4 mit einer Stützschicht 5 aus Stahl und einer darauf aufgebrachten Gleitschicht 7, welche dem nicht dargestellten Gleitpartner zugewandt ist.

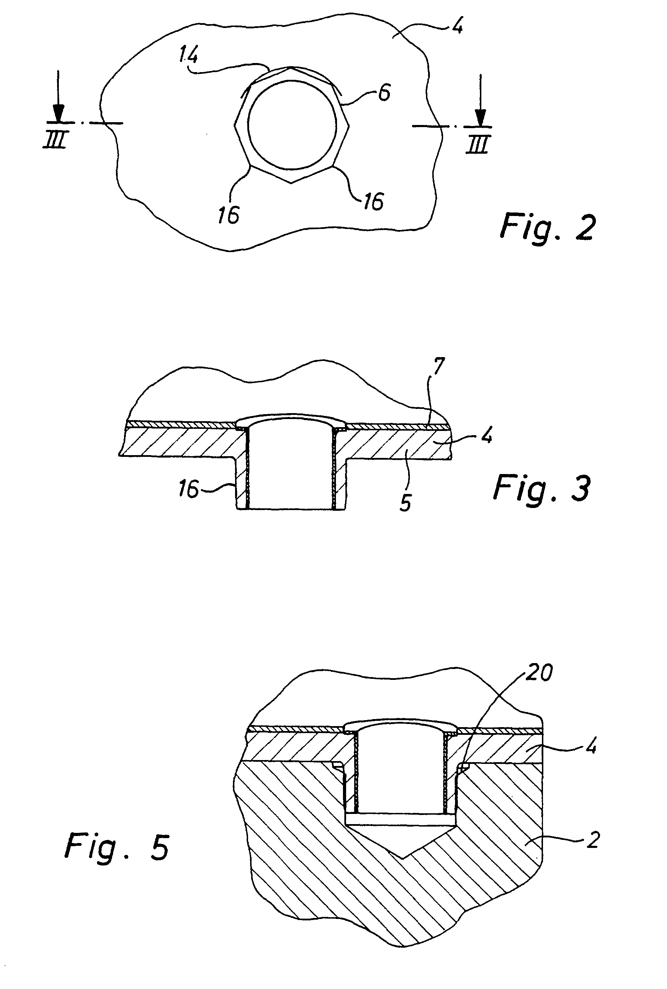

Auf der vom Gleitpartner abgewandten Seite des Lagerelements 4 ist ein Halteelement 6 vorgesehen, das in einer Ebene senkrecht zur radialen Richtung 8 des Lagerelements eine polygonale, nämlich 8-eckige Außenkontur aufweist, so wie dies aus Fig. 2 und 3 ersichtlich ist.

Das Halteelement 6 greift in eine runde Ausnehmung 10 in dem Lagergehäuseteil 2 ein. Die runde Ausnehmung 10 weist einen Innendurchmesser 12 auf, der geringfügig kleiner ist als der Umkreis 14 des Halteelements 6. Auf diese Weise wird eine spielfreie Anordnung des Lagerelements 4 am Lagergehäuseteil 2 erreicht. Bei der Montage des Lagerelements 4 am Lagergehäuseteil 2 geht unter Zusammenwirkung der Eckkanten 16 des polygonalen Halteelements 6 mit der Innenwandung 18 des Lagergehäuseteils 2 eine geringfügige plastische Materialverformung einher, durch welche die spielfreie Anordnung erreicht wird und auch kleine Bemessungsfehler ausgeglichen werden. Dabei graben sich die Eckkanten 16 in die Innenwandung 18 ein, oder es werden die Eckkanten 16 verformt, wobei es zu Materialfluss entgegen der Einpressrichtung des Halteelements 6 kommt. Hierfür erweist es sich als vorteilhaft, wenn wie im dargestellten Fall der Figuren 4 und 5 die Ausnehmung 10 eine Erweiterung 20 in Form einer Abstufung oder einer Anfasung aufweist, welche den Materialfluss aufnehmen kann.

## Patentansprüche

1. Halbkreisförmiges Lagerelement (4), mit einer Stutzschicht (5) und einer darauf aufgebrachten Gleitschicht (7), wobei ein von einer der Gleitschicht (7) abgewandten Seite der Stützschicht (5) vorspringendes polygonales Halteelement (6) vorgesehen ist, das zur drehfesten Verankerung des Lagerelements (4) im montierten Zustand in eine entsprechend ausgebildete Ausnehmung (10) in einem Lagergehäuseteil (2) eingreift, **dadurch gekennzeichnet, dass** das Halteelement (6) in einer Querschnittsebene senkrecht zu einer radialen Richtung (8) des Lagerelements (4) als Durchzug mit polygonalem Außenumfang ausgebildet ist.

2. Lagerelement (4) nach Anspruch 1, **dadurch gekennzeichnet, dass** das Halteelement (6) 5 - 9-eckig ausgebildet ist.

3. Lagerelement (4) nach Anspruch 2, **dadurch gekennzeichnet, dass** das Halteelement (6) 6 - 9-eckig ausgebildet ist.

4. Lagerelement (4) nach Anspruch 3, **dadurch gekennzeichnet, dass** das Halteelement (6) 8-eckig ausgebildet ist.

5. Anordnung aus einem Lagerelement (4) nach einem oder mehreren der vorstehenden Ansprüche und einem Lagergehäuseteil (2) zur Aufnahme des Lagerelements (4) mit einer Ausnehmung (10), in welche das Halteelement (6) des Lagerelements (4) zur drehfesten Verankerung des Lagerelements (4) eingreift, **dadurch gekennzeichnet, dass** die Ausnehmung (10) in dem Lagergehäuseteil (2) in einer Querschnittsebene senkrecht zur radialen Richtung (8) des Lagerelements (4) rund ausgebildet ist und der Innendurchmesser (12) der Ausnehmung (10) kleiner ist als der Durchmesser des Umkreises (14) der Polygonform des Halteelements (6).

6. Anordnung nach Anspruch 5, **dadurch gekennzeichnet, dass** der Innendurchmesser (14) der Ausnehmung (10) unter Berücksichtigung von Fehlertoleranzen bei der Herstellung so ausgewählt wird, dass der obere Wert für den Innendurchmesser (12) kleiner ist als der untere Wert für den Durchmesser des Umkreises (14) der Polygonform des Halteelements.

7. Anordnung nach Anspruch 5 oder 6, **dadurch gekennzeichnet, dass** der Durchmesser des Umkreises (14) des Haltelements (6) 4 - 8 mm beträgt und der Durchmesser der Ausnehmung (10) 0,05 - 0,15 mm geringer ist.

8. Anordnung nach Anspruch 5, 6 oder 7, **dadurch gekennzeichnet, dass** der Durchmesser des Umkreises (14) des Haltelements (6) und der Durchmesser der Ausnehmung (10) derart bemessen sind, dass sich zum Einpressen des Halteelements (6) in die Ausnehmung (10) bei der Montage des Lagerelements (4) am Lagergehäuseteil (2) eine Einpreßkraft von 310 - 2200 N ergibt.

9. Anordnung nach Ansprüche 5 - 8, **dadurch gekennzeichnet, dass** zum Lösen des montierten Halteelements (6) vom Lagergehäuseteil (2) eine Ausziehkraft von 40 - 420 N erforderlich ist.

10. Anordnung nach Ansprüche 5 - 9, **dadurch gekennzeichnet, dass** die Ausnehmung (10) im Bereich des Übergangs zu einer Lageraufnahmefläche eine Abstufung oder Anfasung (20) aufweist.

## Claims

1. Semicircular bearing element (4), comprising a supporting layer (5) and a sliding layer (7) provided thereon, a polygonal holding element (6) projecting from a side of the supporting layer (5) remote from the sliding layer (7) being provided and engaging, in the assembled state, in a correspondingly formed recess (10) in a bearing housing part (2) for rotationally engaged securing of the bearing element (4), **characterised in that** the holding element (6) is formed in a cross-sectional plane perpendicular to a radial direction (8) of the bearing element (4) as a bearer with a polygonal external periphery.

2. Bearing element (4) according to claim 1, **characterised in that** the holding element (6) is pentagonal to nonagonal.

3. Bearing element (4) according to claim 2, **characterised in that** the holding element (6) is hexagonal or nonagonal.

4. Bearing element (4) according to claim 3, **characterised in that** the holding element (6) is octagonal.

5. Arrangement comprising a bearing element (4) according to one or more of the preceding claims, and a bearing housing part (2) for receiving the bearing element (4), comprising a recess (10) in which the holding element (6) of the bearing element (4) engages for non-rotatable securing of the bearing element (4), **characterised in that** the recess (10) in the bearing housing part (2) is round in construction, in a cross-sectional plane perpendicular to the radial direction (8) of the bearing element (4), and the internal diameter (12) of the recess (10) is smaller than the diameter of the circumscribed circle (14) of the polygonal shape of the holding element (6).

6. Arrangement according to claim 5, **characterised in that** the internal diameter (14) of the recess (10) is selected during production, while taking into account manufacturing tolerances, such that the upper value for the internal diameter (12) is smaller than the lower value for the diameter of the circumscribed circle (14) of the polygonal shape of the holding element.

7. Arrangement according to either claim 5 or claim 6, **characterised in that** the diameter of the circumscribed circle (14) of the holding element (6) is 4 to 8 mm and the diameter of the recess (10) is smaller than 0.05 to 0.15 mm.

8. Arrangement according to claim 5, 6 or 7, **characterised in that** the diameter of the circumscribed circle (14) of the holding element (6) and the diameter of the recess (10) are dimensioned such that a pressing-in force of 310 to 2,200 N is obtained for pressing the holding element (6) into the recess (10) when the bearing element (4) is assembled on the bearing housing part (2).

9. Arrangement according to claims 5 to 8, **characterised in that** an extraction force of 40 to 420 N is required to detach the assembled holding element (6) from the beating housing part (2).

10. Arrangement according to claims 5 to 9, **characterised in that**, in the region of the transition to a bearing receiving face, the recess (10) has a graduation or bevel (20).

## Revendications

1. Elément de palier semi-circulaire (4) avec une couche d'appui (5) et une couche de glissement (7) appliquée sur cette dernière, un élément de retenue polygonal (6) étant prévu en débordement d'une face de la couche d'appui (5) opposée à la couche de glissement (7), ledit élément de retenue s'engageant dans un évidement de forme complémentaire (10) que présente une partie de logement de palier (2) pour fixer en rotation l'élément de palier (4) après montage, **caractérisé en ce que** l'élément de retenue (6) affecte, dans un plan de coupe perpendiculaire à une direction radiale (8) de l'élément de palier (4), la forme d'un crevé à pourtour polygonal.

2. Elément de palier (4) selon la revendication 1, **caractérisé en ce que** l'élément de retenue (6) est un polygone à 5 à 9 angles.

3. Elément de palier (4) selon la revendication 2, **caractérisé en ce que** l'élément de retenue (6) est un polygone à 6 à 9 angles.

4. Elément de palier (4) selon la revendication 3, **caractérisé en ce que** l'élément de retenue (6) est octogonal.

5. Dispositif composé d'un élément de palier (4) selon une ou plusieurs des revendications précédentes et d'une partie de logement de palier (2) destinée à recevoir l'élément de palier (4) et présentant un évidement (10) dans lequel s'engage l'élément de retenue (6) de l'élément de palier (4) pour fixer en rotation ledit élément de palier (4), **caractérisé en ce que** l'évidement (10) pratiqué dans la partie de logement de palier (2) affecte une forme ronde dans un plan de coupe perpendiculaire à la direction radiale (8) de l'élément de palier (4) et **en ce que** le diamètre interne (12) de l'évidement (10) est inférieur au diamètre du cercle circonscrit (14) au polygone formé par l'élément de retenue (6).

6. Dispositif selon la revendication 5, **caractérisé en ce que** le diamètre interne (14) de l'évidement (10) est choisi, compte tenu des tolérances de fabrication, de façon que la valeur maximale du diamètre interne (12) soit inférieure à la valeur minimale du diamètre du cercle circonscrit (14) au polygone formé par l'élément de retenue.

7. Dispositif selon la revendication 5 ou 6, **caractérisé en ce que** le diamètre du cercle circonscrit (14) à l'élément de retenue (6) est compris entre 4 et 8 mm et **en ce que** le diamètre de l'évidement (10) est inférieur de 0,05 à 0,15 mm.

8. Dispositif selon la revendication 5, 6 ou 7, **caractérisé en ce que** le diamètre du cercle circonscrit (14) à l'élément de retenue (6) et le diamètre de l'évidement (10) sont dimensionnés de façon que la force requise pour enfoncer l'élément de retenue (6) dans l'évidement (10) lors du montage de l'élément de palier (4) sur la partie de logement de palier (2) soit comprise entre 310 et 2200 N.

9. Dispositif selon l'une quelconque des revendications 5 à 8, **caractérisé en ce que** la force d'extraction requise pour détacher l'élément de retenue monté (6) de la partie de logement de palier (2) est comprise entre 40 et 420 N.

10. Dispositif selon l'une quelconque des revendications 5 à 9, **caractérisé en ce que** l'évidement (10) présente un gradin ou un chanfrein (20) au niveau de la zone de transition avec une surface d'appui du palier.
